# EUROPÄISCHE PATENTANMELDUNG

(11) **EP 3 536 447 A2**
(43) Veröffentlichungstag der Anmeldung: **11.09.2019**
(21) Anmeldenummer: 19161631.7
(22) Anmeldetag: 08.03.2019
(51) Int. Cl.: B23Q 1/00

(54) **SPANNEINRICHTUNG**

(30) Priorität: 08.03.2018 AT 5003718 U
(71) Anmelder: Supanz Vermietungs KG, 6844 Altach (AT)
(72) Erfinder: SUPANZ, Johann, 6971 Hard (AT)
(74) Vertreter: Sonn & Partner Patentanwälte

(57) **Zusammenfassung**

Spanneinrichtung (1) zur Fixierung eines Werkstücks (2) oder einer Werkstückhalterung an einer Grundplatte (3), insbesondere eines Maschinentischs, aufweisend:
- zumindest einen an dem Werkstück (2) oder an der Werkstückhalterung fixierbaren Spannzapfen (4),
- zumindest eine an der Grundplatte (3) fixierbare Spanneinheit (5), welche eine Aufnahmeöffnung (6) für den Spannzapfen (4) und einen Zentrierkonus (7) zur Zentrierung des Spannzapfens (4) in der Aufnahmeöffnung (6) aufweist, wobei
- die Spanneinheit (5) auf Seite des Spannzapfens (4) eine Einführhilfe (8) mit einem Auflaufkonus (9) für den Spannzapfen (4) aufweist.

## Beschreibung

Die vorliegende Erfindung betrifft eine Spanneinrichtung zur Fixierung eines Werkstücks oder einer Werkstückhalterung an einer Grundplatte, insbesondere eines Maschinentischs mit zumindest einen an dem Werkstück oder an der Werkstückhalterung fixierbaren Spannzapfen, zumindest eine an der Grundplatte fixierbare Spanneinheit, welche eine Aufnahmeöffnung für den Spannzapfen und einen Zentrierkonus zur Zentrierung des Spannzapfens in der Aufnahmeöffnung aufweist.

Spanneinrichtungen sind im Stand der Technik in verschiedensten Ausführungen bekannt. Beispiele hierfür finden sich in der EP 2 764 952 A2 oder in der EP 1 707 307 A1. Bei den bekannten Ausführungen weisen die Spannmodule am Maschinentisch seit langem einen Zentrierkonus auf, welcher eine Zentrierung des Spannbolzens am Spannmodul bewirkt.

Die bekannten Spannsysteme sorgen grundsätzlich für eine zuverlässige und stabile Einspannung des Werkstücks. In der Praxis hat sich jedoch die Positionierung von großen und schweren Werkstücken als schwierig herausgestellt, wobei es zudem vielfach zu Beschädigungen der Spanneinrichtungen gekommen ist. Dies gilt insbesondere für Werkstücke, welche mit einer Hebevorrichtung, beispielsweise einem Kran, auf die Spannmodule aufgesetzt werden sollen.

Die Aufgabe der Erfindung besteht darin, die Nachteile des Standes der Technik zu lindern bzw. zu beseitigen. Demnach setzt sich die Erfindung insbesondere zum Ziel, eine konstruktiv einfache Spanneinrichtung der eingangs angeführten Art zu schaffen, mit welcher die Positionierung bzw. Zentrierung des Werkstücks erleichtert und verbessert wird.

Diese Aufgabe wird durch eine Spanneinrichtung mit den Merkmalen von Anspruch 1 gelöst. Bevorzugte Ausführungsformen sind in den abhängigen Ansprüchen angegeben.

Die erfindungsgemäße Spanneinrichtung ist dadurch gekennzeichnet, dass die Spanneinheit auf Seite des Spannzapfens eine Einführhilfe mit einem Auflaufkonus für den Spannzapfen aufweist. Demnach kann das Werkstück (bzw. die Werkstückhalterung) beim Einführen des damit verbundenen Spannzapfens in die Spanneinheit entlang des Auflaufkonus zum Zentrierkonus an der Aufnahmeöffnung der Spanneinheit geführt werden. Der Spannzapfen kann daher bei einem Einführvorgang, bei welchem der Spannzapfen seitlich versetzt zur Spanneinheit gelangt, in die Aufnahmeöffnung der Spanneinrichtung geleitet werden. Diese Ausführung erspart zeitintensive und feinfühlige Adjustierungsversuche und oftmaliges Anheben und Absenken des Werkstücks bzw. der Werkstückhalterung beim Versuch, den Spannzapfen exakt in die Aufnahmeöffnung der Spanneinrichtung zu führen.

Für die Zwecke dieser Offenbarung beziehen sich die Orts- und Richtungsangaben, wie "übereinander", "oben", "unten", etc., auf einen Gebrauchszustand der Spanneinrichtung mit vertikaler Ausrichtung der Längsachsen von Spannzapfen und Spanneinheit. Selbstverständlich kann die Spanneinrichtung auch in einer anderen räumlichen Lage eingesetzt werden, wobei die Orts- und Richtungsangaben dann entsprechend zu übertragen sind.

Vorzugsweise entspricht der Durchmesser des Auflaufkonus am vom Werkstück bzw. von der Werkstückhalterung abgewandten (unteren) Ende im Wesentlichen dem Durchmesser des Zentrierkonus am dem Werkstück bzw. der Werkstückhalterung zugewandten (oberen) Ende, wobei bevorzugt die Längsachse des Auflaufkonus und die Längsachse des Zentrierkonus zusammenfallen. Demnach erweitert der Auflaufkonus der Einführhilfe bei dieser Ausführungsvariante den Zentrierkonus nach oben hin, wodurch ein kontinuierlicher Übergang zwischen dem Auflaufkonus und dem Zentrierkonus gewährleistet wird, welcher dem Spannzapfen ein stufenloses und materialschonendes Eindringen in die Aufnahmeöffnung ermöglicht.

Bevorzugt weist der Auflaufkonus der Einführhilfe einen größeren Öffnungswinkel als der Zentrierkonus auf, wobei sich der Auflaufkonus und der Zentrierkonus jeweils in Richtung des Werkstücks bzw. der Werkstückhalterung, d.h. nach oben hin, erweitern. Dadurch wird an dem dem Werkstück bzw. der Werkstückhalterung zugewandten Ende ein vergleichsweise großer Durchmesser bereitgestellt, wodurch beim Einführen des Spannzapfens noch größere horizontale Abweichungen zur Längsachse der Spanneinheit kompensiert werden können und somit das Werkstück oder die Werkstückhalterung einfacher positioniert und festgespannt werden kann.

Gemäß einer bevorzugten Ausführungsvariante beträgt der Winkel des Auflaufkonus der Einführhilfe zwischen 30° und 45° zur Vertikalen. Der Winkel des Zentrierkonus zur Vertikalen (bzw. zur Längsachse der Spanneinheit) ist bevorzugt mindestens 5°, insbesondere mindestens 10°, geringer als der Winkel des Auflaufkonus der Einführhilfe.

Bei einer bevorzugten Ausführungsform ist die Einführhilfe über eine lösbare Verbindung, insbesondere über eine Schraubverbindung, mit einem den Zentrierkonus aufweisenden Grundgehäuse der Spanneinheit verbunden. Vorteilhafterweise kann die Einführhilfe bei einer Beschädigung durch die hohen Belastungen beim Festspannen schwerer Werkstücke unabhängig vom Grundgehäuse der Spanneinheit und unabhängig vom Spannmechanismus gewechselt werden. Hierfür ist es lediglich erforderlich, die lösbare Verbindung zwischen der Einführhilfe und dem Grundgehäuse zu lösen und eine unverbrauchte Einführhilfe am Grundgehäuse anzubringen, in welchem der Spannmechanismus zum Festspannen des Spannzapfens untergebracht ist.

Zum Verspannen des Spannzapfens in der Aufnahmeöffnung kann der Spannmechanismus im Grundgehäuse der Spanneinheit beispielsweise, wie im Stand der Technik hinlänglich bekannt, Spannkeile aufweisen, welche im eingeführten Zustand des Spannzapfens in eine Ausnehmung am Umfang des Spannzapfens eingreifen können.

Durch Lösen der lösbaren Verbindung kann mit wenigen Hangriffen beispielsweise eine standardmäßige Einführhilfe durch eine für ein kundenspezifisches Werkstück ausgelegte Einführhilfe ersetzt werden.

Aus fertigungstechnischen Gründen ist die Einführhilfe vorzugsweise aus einem Plattenteil mit einer Aussparung zur Ausbildung des Auflaufkonus gebildet. Bei Beschädigung des Plattenteils kann dieses einfach und kostengünstig ersetzt werden, wohingegen das darunterliegende Grundgehäuse und der Zentrierkonus der Spanneinheit geschont werden.

Bevorzugt erstreckt sich der Auflaufkonus über im Wesentlichen die gesamte Höhe (in Richtung der Längsachse der Spanneinheit gesehen) des Plattenteils.

Weiters ist bevorzugt, wenn der Auflaufkonus eine größere, insbesondere eine um ein Mehrfaches größere, Höhe (d.h. Erstreckung in Richtung der Längsachse der Spanneinheit) als der Zentrierkonus aufweist.

Bei einer besonders bevorzugten Ausführungsform weist der Spannzapfen ein Dämpfungselement, insbesondere aus einem Elastomermaterial, zur Dämpfung des Aufsetzens des Spannzapfens auf das Spannmodul, auf. Das Dämpfungselement verringert einerseits Geräusche beim Aufeinandertreffen des Spannzapfens und der Spanneinheit. Andererseits werden so der Spannzapfen und die Spanneinheit geschont, wodurch der Materialverschleiß verringert und die Lebensdauer der Spanneinrichtung erhöht wird. Das Dämpfungselement kann zudem eine Grobzentrierung bewirken, wodurch insbesondere Beschädigungen des präzise gefertigten Zentrierkonus bei der anschließenden Feinzentrierung mittels des Zentrierkonus vermieden werden.

Bevorzugt wird das Dämpfungsmaterial und/oder die Geometrie des Dämpfungselements an die Gewichtsklasse des festzuspannenden Werkstücks angepasst. Beispielsweise kann das jeweilige Dämpfungselement aus einer Gruppe von Dämpfungsmaterialien unterschiedlicher Shore-A-Härten ausgewählt sein, wobei die Härte des Dämpfungsmaterials bevorzugt durch die Farbe des Dämpfungselements gekennzeichnet wird.

In einer bevorzugten Anordnung liegt das Dämpfungselement im verbundenen Zustand von Spannzapfen und Spanneinheit am Auflaufkonus an. Beim Einführen des Spannzapfens in die Aufnahmeöffnung der Spanneinheit trifft somit zunächst das Dämpfungselement am Spannzapfen auf den Auflaufkonus der Einführhilfe, so dass der Aufprall gedämpft wird und so einer Beschädigung von Spannzapfen bzw. Einführhilfe entgegengewirkt wird.

Zur Erzielung einer konstruktiv einfachen Ausführung und zur Erleichterung der Montage der Spanneinrichtung ist als Dämpfungselement ein Dämpfungsring vorgesehen, welcher vorzugsweise in einer dafür vorgesehenen Einbuchtung am Spannzapfen, angeordnet ist.

Vorzugsweise läuft der Dämpfungsring in Einführrichtung des Spannzapfens gesehen keilförmig zusammen, um den Öffnungswinkel des ebenfalls in Einführrichtung zusammenlaufenden Auflaufkonus auszugleichen und so eine Grobzentrierung des Spannzapfens zu erreichen.

Vorteilhafterweise ist daher eine Vorzentrierung durch das Auftreffen des unteren Endes des Spannzapfens auf den Auflaufkonus, eine Grobzentrierung durch die Anordnung des Dämpfungsringes zwischen der Mantelfläche des Spannzapfens und dem Auflaufkonus und eine Feinzentrierung durch den Zentrierkonus vorgesehen.

In einer bevorzugten Anordnung weist der Spannzapfen einen Auflageflansch zur Auflage auf der dem Werkstück bzw. der Werkstückhalterung zugewandten Oberseite der Einführhilfe auf. Der Auflageflansch ermöglicht die korrekte vertikale Positionierung und Abstützung des Spannzapfens an der Spanneinheit. Im eingeführten Zustand des Spannzapfens liegt die untere, der Spanneinheit zugewandte, Seite bevorzugt im Wesentlichen plan auf der oberen, dem Spannzapfen, zugewandten Oberseite der Einführhilfe auf.

Bevorzugt ist das Dämpfungselement an der der Spanneinheit zugewandten Seite des Auflageflansches, d.h. an der Unterseite des Auflageflansches, angeordnet. Beim Einführen des Spannzapfens in die Spanneinheit trifft zunächst das untere Ende des Spannzapfens auf den Auflaufkonus, wodurch eine Vorzentrierung bewirkt wird. Durch Absenken des Spannzapfens wird das Dämpfungselement an der Unterseite des Auflageflansches am Auflaufkonus angelegt und so eine Grobzentrierung bewerkstelligt. Schließlich erfolgt die Feinzentrierung mittels des Zentrierkonus der Spanneinheit.

Die Erfindung wird nachstehend anhand eines bevorzugten Ausführungsbeispiels in den Zeichnungen weiter erläutert.
Fig. 1 zeigt eine Ansicht einer erfindungsgemäßen Spanneinrichtung vor dem Einführen eines an einem Werkstück fixierten Spannzapfens in eine Aufnahmeöffnung einer Spanneinheit an einer Grundplatte eines Maschinentischs.
Fig. 2 zeigt eine Ansicht der Spanneinrichtung gemäß Fig. 1 beim Auftreffen des Spannzapfens in einem horizontal versetzten Zustand auf einen Auflaufkonus einer Vorzentrier- bzw. Einführhilfe.
Fig. 3 zeigt eine Ansicht der Spanneinrichtung gemäß Fig. 1 und Fig. 2 bei der Grobzentrierung des Spannzapfens mittels eines Dämpfungselements.
Fig. 4 zeigt eine Ansicht der Spanneinrichtung gemäß den Fig. 1 bis 3 im festgespannten Zustand des Spannzapfens an der Spanneinheit, wobei die Feinzentrierung mittels eines Zentrierkonus am Grundgehäuse der Spanneinheit bewirkt wird.

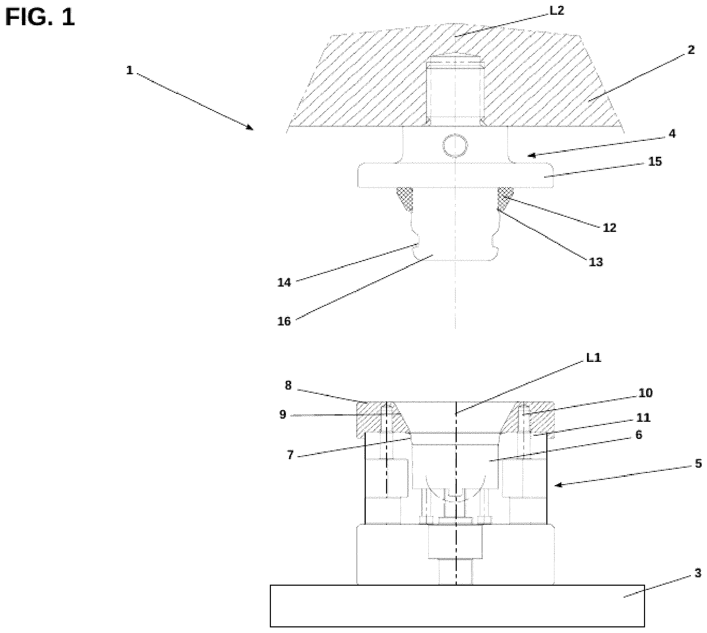

Fig. 1 zeigt eine Spanneinrichtung 1 zur Montage auf einer (schematisch dargestellten) Grundplatte 3 auf einem Maschinentisch. Die Spanneinrichtung 1 weist einen an dem Werkstück 2 oder an einer (nicht gezeigten) Werkstückhalterung fixierten Spannzapfen 4 und eine an der Grundplatte 3 fixierte Spanneinheit 5 auf. Die Spanneinheit 5 weist eine Aufnahmeöffnung 6 für den Spannzapfen 4 und einen Zentrierkonus 7 zur Feinzentrierung des Spannzapfens 4 in der Aufnahmeöffnung 6 auf.

In der gezeigten Ausführung weist die Spanneinheit 5, auf der dem Spannzapfen 4 zugewandten Seite, eine Einführhilfe 8 in Form eines Plattenteils 8a mit einem Auflaufkonus 9 für den Spannzapfen 4 auf. Das Plattenteil 8a ist über eine Schraubverbindung 10 mit einem den Zentrierkonus 7 aufweisenden Grundgehäuse 11 der Spanneinheit 5 lösbar verbunden. In dem Grundgehäuse 11 der Spanneinheit 5 ist zudem ein herkömmlicher Spannmechanismus zum Festspannen des in der Aufnahmeöffnung 6 angeordneten Spannzapfens 4 vorgesehen.

In der gezeigten Ausführung weist der Spannzapfen 4 zudem ein Dämpfungselement 12 auf, welches durch einen Dämpfungsring 12a gebildet ist, der in einer umlaufenden Einbuchtung 13 im Spannzapfen 4 aufgenommen ist. Die Einbuchtung 13 befindet sich oberhalb einer trapezförmigen Ausnehmung 14 des Spannzapfens 4, welche mit dem Spannmechanismus an der Spanneinheit 5 zusammenwirkt. In der gezeigten Ausführung ist das Dämpfungselement an der Unterseite eines Auflageflansches 15 des Spannzapfens 4 vorgesehen. Das Dämpfungselement 12 ist aus einem weicheren Material als der Spannzapfen 4, insbesondere aus einem Elastomermaterial, gebildet.

In den Fig. 1 bis 4 sind die einzelnen Schritte beim Einführen des Spannzapfens 4 in die Spanneinheit 5 veranschaulicht.

Gemäß Fig. 1 befindet sich der Spannzapfen 4 in einem Abstand von der Spanneinheit 5, wobei das Werkstück insbesondere mit einer Hebeeinrichtung, beispielsweise einem Kran (nicht gezeigt), dem Maschinentisch angenähert wird.

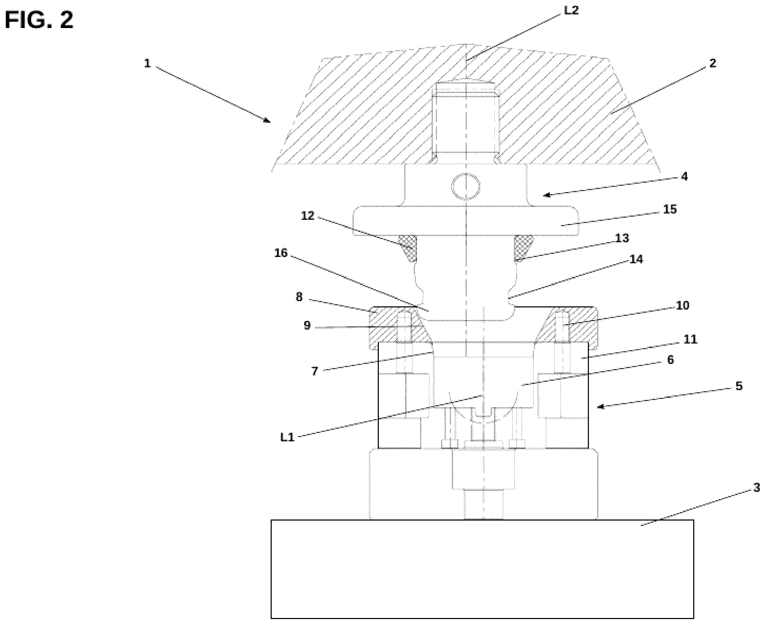

Fig. 2 zeigt die Spanneinrichtung 1 beim Auftreffen des Spannzapfens 4 in einem horizontal versetzten Zustand auf den Auflaufkonus 9 der Einführhilfe 8. Der Spannzapfen 4 weist an seinem unteren Ende einen Spannzapfenstumpf 16 auf, der beim Auftreffen des Spannzapfens 4 auf die Einführhilfe 8 entlang des Auflaufkonus 9 in Richtung des Zentrierkonus 7 geleitet wird. Die Längsachse L1 der Spanneinheit 5 und die Längsachse L2 des Spannzapfen 4 können hierbei in horizontaler Richtung zueinander versetzt sein.

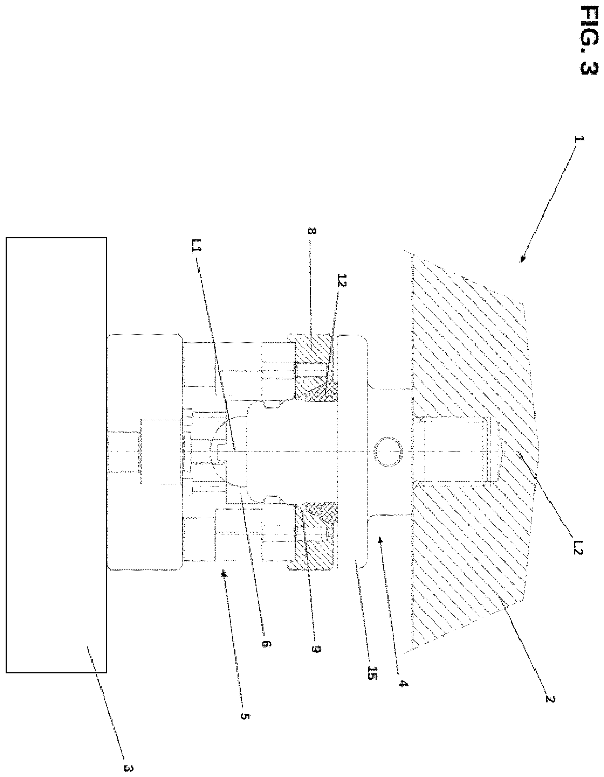

Fig. 3 zeigt die Spanneinrichtung 1 bei der Grobzentrierung des Spannzapfens 4 in der Spanneinheit 5 mittels des Dämpfungselements 12. Dabei wird das Dämpfungselement 8 in Eingriff mit dem Auflaufkonus 9 gebracht, wodurch die Längsachse L1 der Spanneinheit 5 und die Längsachse L2 des Spannzapfen 4 in horizontaler Richtung aneinander ausgerichtet werden.

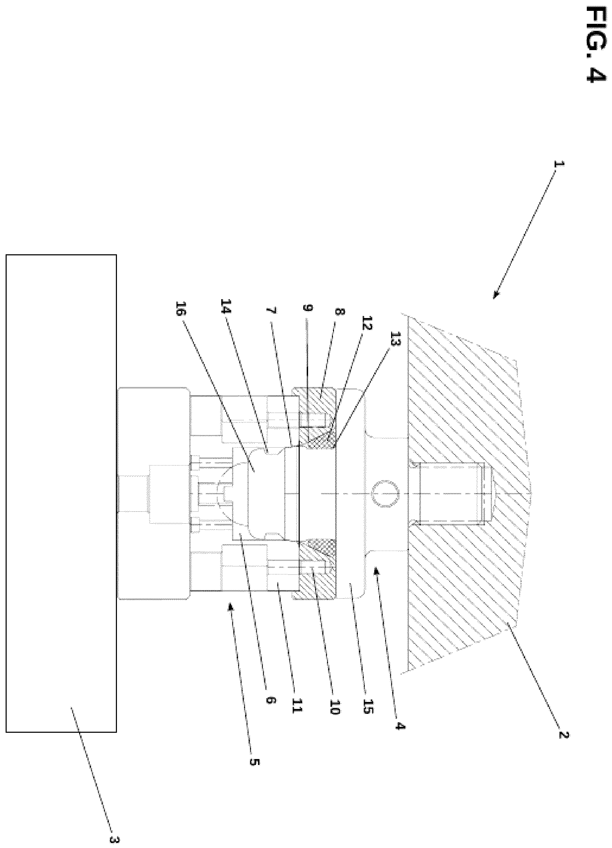

Fig. 4 zeigt den Spannzapfen 4 und die Spanneinheit 5 im festgespannten Zustand, wobei der Spannzapfen 4 mittels des Zentrierkonus 7 am Grundgehäuse 11 der Spanneinheit 5 zentriert ist. Die Unterseite des Auflageflansches 15 liegt auf der Oberseite der Einführhilfe 8 der Spanneinheit 5 auf. Die Spannkeile des Spannmechanismus im Grundgehäuse 11 der Spanneinheit 5 greifen oberhalb des Spannzapfenstumpfes 16 in die beispielsweise trapezförmigen Ausnehmung 14 des Spannzapfens 4, wodurch der Spannzapfen 4 in der Aufnahmeöffnung 6 der Spanneinheit 5 fixiert ist.

## Patentansprüche

1. Spanneinrichtung (1) zur Fixierung eines Werkstücks (2) oder einer Werkstückhalterung an einer Grundplatte (3), insbesondere eines Maschinentischs, aufweisend:
- zumindest einen an dem Werkstück (2) oder an der Werkstückhalterung fixierbaren Spannzapfen (4),
- zumindest eine an der Grundplatte (3) fixierbare Spanneinheit (5), welche eine Aufnahmeöffnung (6) für den Spannzapfen (4) und einen Zentrierkonus (7) zur Zentrierung des Spannzapfens (4) in der Aufnahmeöffnung (6) aufweist, **dadurch gekennzeichnet, dass**
- die Spanneinheit (5) auf Seite des Spannzapfens (4) eine Einführhilfe (8) mit einem Auflaufkonus (9) für den Spannzapfen (4) aufweist.

2. Spanneinrichtung (1) nach Anspruch 1, **dadurch gekennzeichnet, dass** der Durchmesser des Auflaufkonus (9) am Werkstück (2) bzw. von der Werkstückhalterung abgewandten Ende im Wesentlichen dem Durchmesser des Zentrierkonus (7) am dem Werkstück (2) bzw. der Werkstückhalterung zugewandten Ende entspricht.

3. Spanneinrichtung (1) nach Anspruch 1 oder 2, **dadurch gekennzeichnet, dass** der Auflaufkonus (9) der Einführhilfe (8) einen größeren Öffnungswinkel als der Zentrierkonus (7) aufweist.

4. Spanneinrichtung (1) nach einem der Ansprüche 1 bis 3, **dadurch gekennzeichnet, dass** der Winkel des Auflaufkonus (9) der Einführhilfe (8) zwischen 30° und 45° zur Vertikalen beträgt.

5. Spanneinrichtung (1) nach einem der Ansprüche 1 bis 4, **dadurch gekennzeichnet, dass** die Einführhilfe (8) über eine lösbare Verbindung, insbesondere über eine Schraubverbindung (10), mit einem den Zentrierkonus (7) aufweisenden Grundgehäuse (11) der Spanneinheit (5) verbunden ist.

6. Spanneinrichtung (1) nach einem der Ansprüche 1 bis 5, **dadurch gekennzeichnet, dass** die Einführhilfe (8) ein Plattenteil (8a) mit einer Aussparung zur Ausbildung des Auflaufkonus (9) aufweist.

7. Spanneinrichtung (1) nach Anspruch 6, **dadurch gekennzeichnet, dass** sich der Auflaufkonus (9) über im Wesentlichen die gesamte Höhe des Plattenteils (8a) erstreckt.

8. Spanneinrichtung (1) nach einem der Ansprüche 1 bis 7, **dadurch gekennzeichnet, dass** der Auflaufkonus (9) eine größere, insbesondere eine um ein Mehrfaches größere, Höhe als der Zentrierkonus (7) aufweist.

9. Spanneinrichtung (1) nach einem der Ansprüche 1 bis 8, **dadurch gekennzeichnet, dass** der Spannzapfen (4) ein Dämpfungselement (12), insbesondere aus einem Elastomermaterial, zur Dämpfung des Aufsetzens des Spannzapfens (4) auf das Spannmodul (5) aufweist.

10. Spanneinrichtung (1) nach Anspruch 9, **dadurch gekennzeichnet, dass** das Dämpfungselement (12) im verbundenen Zustand von Spannzapfen (4) und Spanneinheit (5) am Auflaufkonus (9) anliegt.

11. Spanneinrichtung (1) nach Anspruch 9 oder 10, **dadurch gekennzeichnet, dass** als Dämpfungselement (12) ein Dämpfungsring (12a) vorgesehen ist.

12. Spanneinrichtung (1) nach einem der Ansprüche 9 bis 11, **dadurch gekennzeichnet, dass** der Dämpfungsring (12a) in Einführrichtung des Spannzapfens (4) gesehen keilförmig zusammenläuft.

13. Spanneinrichtung (1) nach einem der Ansprüche 1 bis 12, **dadurch gekennzeichnet, dass** der Spannzapfen (4) einen Auflageflansch (15) zur Auflage auf der Einführhilfe (8) aufweist.

14. Spanneinrichtung nach Anspruch 13, **dadurch gekennzeichnet, dass** das Dämpfungselement (12) an der der Spanneinheit (5) zugewandten Seite des Auflageflansches (15) angeordnet ist.
